# FASCICULE DE BREVET EUROPEEN

(11) **EP 1 608 904 B1**
(45) Date de publication et mention de la délivrance du brevet: **25.10.2006**
(21) Numéro de dépôt: 04720902.8
(22) Date de dépôt: 16.03.2004
(51) Int. Cl.: F16L 11/08

(54) **CONDUITE TUBULAIRE FLEXIBLE POUR LE TRANSPORT D'UN FLUIDE**
FLEXIBLE ROHRLEITUNG ZUM TRANSPORT EINES FLUIDS
FLEXIBLE TUBULAR FLUID-TRANSFER CONDUIT

(30) Priorité: 21.03.2003 FR 0303490
(43) Date de publication de la demande: 28.12.2005
(73) Titulaire: Technip France, 92400 Courbevoie (FR)
(72) Inventeur: DUPOIRON, François, F-76360 Barentin (FR)
(74) Mandataire: Bertrand, Didier
(86) Numéro de dépôt international: PCT/FR2004/000637
(87) Numéro de publication internationale: WO 2004/085900

(56) Documents cités:
- EP-A- 0 937 932
- WO-A-00/17479
- WO-A-01/51839

## Description

La présente invention concerne une conduite tubulaire flexible du type de celles utilisées pour l'exploitation et le transport des fluides dans l'industrie pétrolière offshore. Elle concerne plus précisément des conduites destinées au transport de fluides dits polyphasiques ou de gaz.

Des conduites destinées au transport de fluide dans l'industrie pétrolière offshore sont décrites dans de nombreux brevets de la demanderesse tels que par exemple le brevet EP 0 937 932. Elles satisfont entre autre aux recommandations de l'API 17B (American Petroleum Institute Recommended Practice 17B). Ces conduites sont formées d'un ensemble de couches différentes destinées chacune à permettre à la conduite flexible de supporter les contraintes de service ou de manutention ainsi que les contraintes spécifiques liées à leur utilisation offshore. Ces couches comprennent notamment des gaines polymériques et des couches de renfort formées par des enroulements de fil de forme, de feuillard ou de fils en matériau composites, mais elle peuvent comprendre également des enroulements de bandes diverses entre les différentes couches de renfort. Elles comprennent plus particulièrement au moins une gaine d'étanchéité interne ou gaine de pression destinée à véhiculer le fluide transporté. Ladite gaine d'étanchéité peut être l'élément le plus interne de la conduite (la conduite est alors dite de type « smooth bore ») ou être disposée autour d'une carcasse formée par exemple de l'enroulement à pas court d'un feuillard agrafé (la conduite est alors dite de type « rough-bore »). Des couches de renforts formés d'enroulement de fils métalliques ou composites sont généralement disposées autour de la gaine de pression et peuvent comporter par exemple :
- Une armure de pression formée d'un enroulement à pas court d'un fil de forme métallique agrafé, ladite armure de pression étant disposée directement autour de la gaine d'étanchéité afin de reprendre la composante radiale de la pression interne.
- Eventuellement une frette formée d'un enroulement à pas court d'un fil de forme non agrafée située au-dessus de l'armure de pression pour contribuer à la résistance à la pression interne, l'armure de pression avec ou sans ladite frette forme ce qui est appelé la voûte de pression de la conduite.
- Des nappes d'armures de traction formées d'enroulements à pas long de fils de forme métalliques ou composites, lesdites nappes étant destinées à reprendre la composante axiale de la pression interne ainsi que les sollicitations longitudinales que subit la conduite, comme par exemple les efforts de pose.

Une gaine polymérique externe ou gaine de protection est généralement prévue au-dessus des couches de renfort précédemment citées. Dans certains cas, une gaine polymérique intermédiaire est également prévue. Cette gaine intermédiaire peut par exemple être une gaine dite anti-écrasement (« anti-collapse » en anglais) disposée généralement autour de la voûte de pression. Cette gaine intermédiaire a notamment pour objectif de prévenir l'écrasement de la gaine d'étanchéité et de la carcasse éventuelle qu'elle entoure lorsque l'annulaire (espace situé entre la gaine d'étanchéité et la gaine externe) est soumis à une pression excessive comparée à la pression interne du fluide qu'elle transporte. Ceci peut être le cas lorsque la gaine externe est endommagée et n'est plus étanche et donc que la pression hydrostatique règne dans l'annulaire. Cette gaine intermédiaire anti écrasement est généralement présente dans le cas d'une conduite de type «Smooth Bore» car la gaine d'étanchéité est d'autant plus sensible à l'écrasement qu'elle n'est pas supportée par une carcasse.

Dans les conduites flexibles de production, le fluide transporté est souvent polyphasique et il contient des gaz tels que l'H2S, le CO2 ou le méthane, qui peuvent diffuser à travers la gaine de pression. Le gaz diffusant à travers la gaine d'étanchéité de la conduite flexible augmente la pression dans l'annulaire au fur et à mesure de la diffusion. Cette augmentation de la pression dans l'annulaire peut conduire à des problèmes d'écrasement de la gaine d'étanchéité interne et ce notamment dans le cas d'un «Smooth Bore» ou ladite gaine n'est pas retenue par une carcasse. Cela est par exemple le cas lorsque la pression de l'annulaire devient très supérieure à la pression régnant dans la conduite, comme lors d'un arrêt de production ou dans certaines conditions particulières en service. Aussi, il est prévu de drainer les gaz présents dans l'annulaire pour limiter la pression de celui-ci. Le drainage des gaz s'effectue à travers et le long des armures de traction vers une soupape de drainage généralement située au niveau d'un embout terminal de la conduite flexible.

Dans le cas d'un « smooth bore », la gaine intermédiaire située au dessus de la voûte de pression empêche le drainage du gaz dans la nappe d'armure de traction. Le drainage du gaz devrait alors être réalisé à l'intérieur de la voûte de pression, mais une telle solution n'est pas envisageable car il est très difficile de drainer efficacement le gaz dans une couche telle que la voûte de pression dont l'angle d'enroulement est proche de 90°. Ainsi, les conduites flexibles de type «Smooth Bore» ne sont pas utilisées pour le transport de fluide polyphasique ou de gaz et sont exclusivement réservé aux lignes d'injection d'eau, lignes pour lesquels il n'y a pas de problème de diffusion de gaz. Ainsi, seul les conduites du type «Rough Bore» sont utilisées pour réaliser des lignes de production, mais ces structures sont plus onéreuses en raison de la présence d'une couche métallique coûteuse supplémentaire notamment. De plus, la géométrie de cette couche est défavorable aux écoulements du fluide transporté.

Ainsi, il existe un besoin réel d'une structure à faible coût de type «Smooth Bore» qui puissent être utilisée pour transporter des fluides polyphasiques ou des gaz. Pour tenter de répondre à ce besoin, il a été proposé des solutions consistants à drainer le gaz au plus proche de la gaine de pression interne. Dans la demande de brevet WO 01/33130, il est décrit une conduite flexible dont la gaine interne présente des rainures sur sa surface externe, lesdites rainures étant destinées à drainer le gaz entre ladite gaine et la voûte de pression. Dans la demande de brevet FR 01 11135 de la demanderesse non encore publiée, la gaine interne de pression est réalisée en deux couches (double gaine) et le gaz est drainé entre les deux gaines dans des rainures longitudinale prévues à cet effet. Toutefois, ces solutions sont très compliquées à mettre en oeuvre notamment en raison des problèmes de fluage des matériaux thermoplastiques utilisés pour réaliser les gaines.

Dans une autre demande relative à des conduites flexible du type « bonded » WO 99/66246, il est évoqué la circulation d'un liquide ou d'un gaz au dessus de la voûte de pression dans un espace libre ou partiellement libre. Toutefois, il n'est aucunement détaillé ni même suggéré une quelconque solution au problème de surpression dans l'annulaire du à un problème de gaz diffusant au travers de la gaine de pression.

Dans un autre brevet EP 0 937 932, la demanderesse a décrit une conduite avec une structure qui comporte deux paires d'armures de traction et une gaine intermédiaire située entre la paire d'armure externe et la paire d'armure interne, ladite structure pouvant être un «Smooth Bore». Dans une telle structure, le gaz présent dans l'annulaire « interne » (espace situé entre la gaine interne et la gaine intermédiaire) est drainé à l'intérieur de la paire de nappe d'armure de traction intérieure qui présente un angle d'armage compris entre 30 et 55 °. Toutefois, cette solution proposée ne permet pas de réaliser une conduite de type « smooth bore » utilisable en production à faible coût, et ce notamment en raison des quatre nappes d'armures de traction prévues pour la conduite qui en augmentent le coût.

Par ailleurs, quelque soit le type de conduite («Smooth Bore» ou «Rough Bore») utilisé, le problème de la diffusion de gaz implique que les éléments métalliques de la structure (voûte de pression, armures de traction) qui se trouvent dans l'annulaire doivent être résistants à l'H2S notamment. Ceci implique un coût plus important du aux traitements particulier qu'ils subissent et les caractéristiques mécaniques obtenues restent moyennes.

Aussi, la présente invention a pour objectif de remédier aux inconvénients précités des structures de l'art antérieur en proposant une conduite flexible utilisable pour transporter des fluides polyphasiques ou des gaz.

Selon sa caractéristique principale, la conduite tubulaire flexible destinée au transport de fluide dans le domaine de l'exploitation pétrolière offshore est du type comportant au moins de l'intérieur vers l'extérieur une gaine de pression, une voûte de pression comprenant au moins une armure de résistance à la pression, une gaine intermédiaire et au moins une nappe d'armures de traction, et est caractérisée en ce qu'elle comporte dans l'espace annulaire interne formé entre la gaine de pression et la gaine intermédiaire, une couche permettant le drainage des gaz présents dans cet espace annulaire et en ce que ladite couche permettant le drainage est formée par l'enroulement à pas court d'au moins un élément allongé comportant des espaces ou évidement de drainage transversaux qui permettent le drainage des gaz entre les spires successives de l'enroulement dans une direction sensiblement transversale aux dites spires, c'est-à-dire dans la direction longitudinale correspondant à l'axe de la conduite flexible.

Selon des caractéristiques complémentaires de l'invention, l'élément allongé peut être constitué par un fil de forme ou un feuillard métallique préformé ou être réalisé intégralement ou partiellement en matériau polymère.

Selon des modes d'exécutions, la couche permettant le drainage est avantageusement formée par une frette disposée autour de l'armure de résistance à la pression et l'angle d'armage de l'élément allongé par rapport à l'axe de la conduite est avantageusement supérieure à 70°.

Selon une variante d'exécution, les évidements transversaux sont positionnés le long de l'élément allongé pour être au moins partiellement alignés avec un autre évidement respectif de l'élément allongé situé dans la spire jointive, une fois l'enroulement effectué. On peut noter que l'élément allongé peut également présenter une espace longitudinal dans son profil pour permettre la circulation du gaz à l'intérieur d'une même spire.

Selon une variante, la couche permettant le drainage est formée de deux éléments allongés de profils différents.
- La figure 1 représente schématiquement en perspective une conduite flexible de l'invention de type « smooth bore» et ses différentes couches.
- La figure 2 représente en coupe longitudinale un premier mode de réalisation d'une conduite flexible de type « smooth-bore » de l'invention.
- La figure 3 représente schématiquement développé à plat et en perspective, l'enroulement formant la couche de drainage du premier mode de réalisation d'une conduite flexible de type « smooth-bore » de l'invention.
- La figure 4 illustre selon une vue similaire à la figure 3 un deuxième mode de réalisation de la couche de drainage.
- La figure 5 illustre selon une vue similaire à la figure 3 un troisième mode de réalisation de la couche de drainage.
- Notons que pour faciliter la compréhension des figures 3 à 5, l'enroulement formant la couche de drainage est représenté dans un plan.

La conduite tubulaire flexible 1 de l'invention est du type destinée à l'exploitation pétrolière offshore telle que celles définies par les recommandations de l'API 17B et de l'API 17J. Elle est constituée d'un ensemble de couches constitutives non liées comprenant des gaines polymériques et des couches de renfort ou armures, lesdites couches pouvant le cas échéant être séparées par des enroulements de bandes diverses destinées à éviter le fluage des gaines ou destinées à former une isolation thermique par exemple.

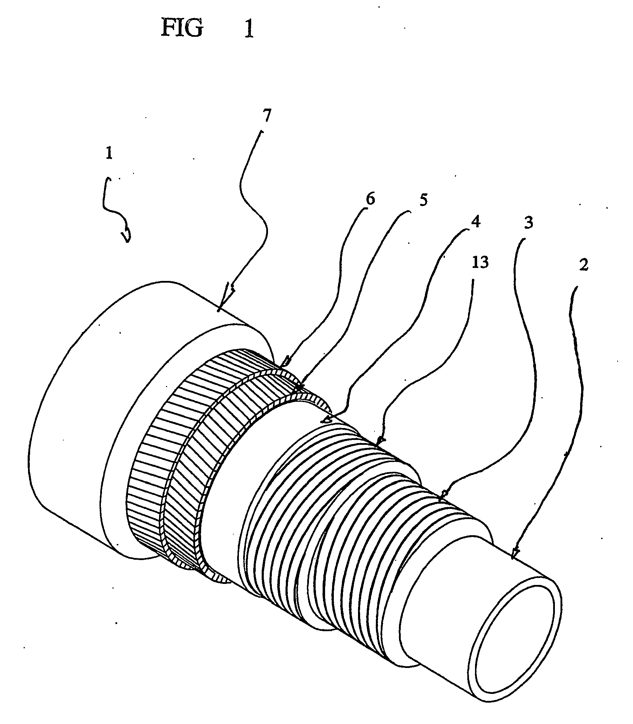

Selon le mode de réalisation de l'invention illustré figures 1 à 3, la conduite flexible portant la référence générale 1 est du type non liée (« unbonded » en anglais) et de type « smooth-bore », l'élément le plus interne étant formé par une gaine d'étanchéité ou gaine de pression 2. Elle est généralement obtenue par extrusion et a pour fonction de réaliser l'étanchéité du conduit (« bore » en anglais) où circule le fluide et de résister à la composante radiale de la pression interne exercée par ledit fluide à l'aide de la voûte de pression qui la recouvre.

Cette voûte de pression comporte généralement au moins une armure de résistance à la pression 3 par exemple formée d'un enroulement à pas court d'un fil de forme métallique agrafé et destiné à reprendre la pression interne avec la gaine de pression qu'elle recouvre. On entend par enroulement à pas court, un enroulement dont l'angle d'armage par rapport à l'axe longitudinal de la conduite est supérieure à 70° et avantageusement supérieure à 80°. Il va de soi que la voûte de pression peut également comporter une frette 13 destinée à renforcer la résistance de ladite voûte à la pression interne. La conduite comprend également des nappes d'armures dites de traction 5, 6 enroulées à pas long et destinées à reprendre les efforts longitudinaux auxquels peut être soumise la conduite (composante longitudinale de la pression ou efforts de pose par exemple). La conduite flexible 1 comporte également une gaine de protection externe 7 destinée à protéger les couches de renfort 3, 13, 5, 6 situées dans l'espace annulaire qu'elle forme avec la gaine interne.

Selon l'invention, la conduite flexible 1 comporte une gaine intermédiaire 4 sous la forme d'une gaine anti-écrasement ou anti-collapse. Cette gaine définit deux espaces annulaires, un annulaire « interne » 30 situé entre elle et la gaine d'étanchéité interne 2 et un annulaire « externe » 20 entre elle et la gaine externe 7. Cette gaine intermédiaire 4 est notamment destinée à réduire les risques d'écrasement de la gaine d'étanchéité 2 lorsque la gaine externe est endommagée et que l'annulaire « externe » 20 se trouve soumis à la pression hydrostatique par exemple. Elle est ainsi destinée à supporter cette pression à l'aide de la couche sur laquelle elle s'appuie (voûte de pression), empêchant la pression hydrostatique de venir s'appliquer directement sur la gaine d'étanchéité 2.

Selon l'invention, la conduite flexible 1 comporte une couche destinée à permettre le drainage des gaz diffusant à travers la gaine de pression 2 dans l'annulaire interne 30. Cette couche est avantageusement disposée entre la gaine de pression 2 et la gaine anti-écrasement 4 afin de drainer les gaz de diffusion à l'intérieur de l'annulaire interne 30. Cette couche est formée de l'enroulement à pas court d'au moins un élément allongé 12, 14, 18, 19 qui présente des espaces ou évidements transversaux de drainage 15 qui permettent le drainage du gaz dans une direction transversale à la spire qu'il forme dans l'enroulement. Les évidements sont positionnés sur l'élément allongé pour assurer un passage de drainage continu entre les spires successives une fois l'enroulement réalisé.

De préférence la répartition des évidements transversaux de l'élément allongé est calculée pour que les évidements de deux spires successives dudit enroulement soient au moins partiellement alignés. Ainsi, ces espaces favorisent le drainage des gaz transversalement par rapport à l'axe longitudinal de l'élément allongé enroulé à pas court, c'est-à-dire qu'ils favorisent le drainage du gaz dans l'annulaire interne sensiblement dans la direction longitudinale de la conduite.

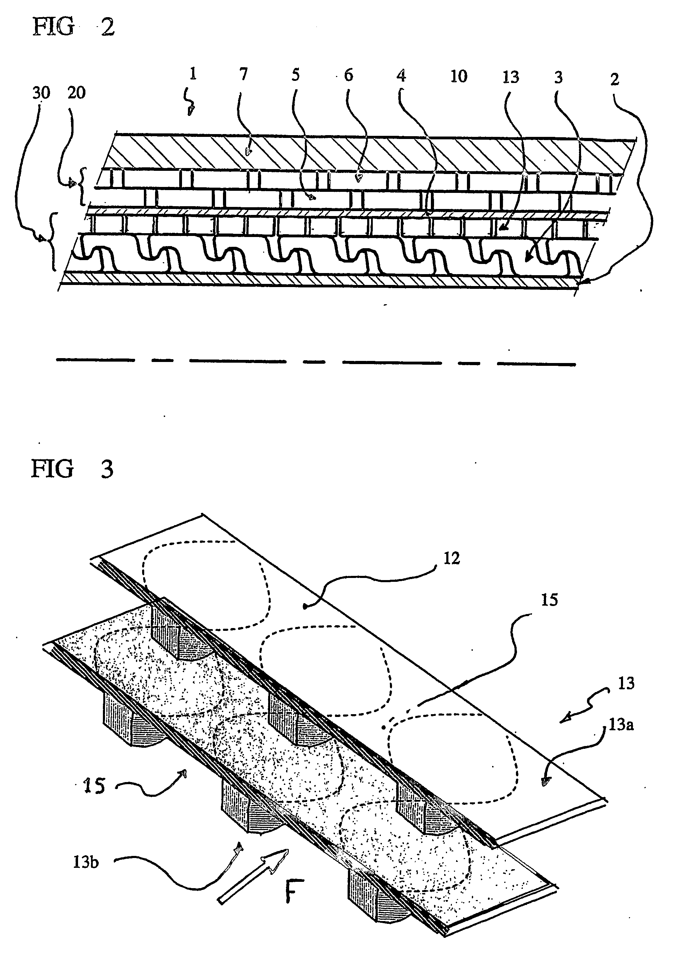

Comme l'illustre le mode de réalisation de la figure 3, le profil de l'élément allongé présente des espaces transversaux ou gorges 15 régulièrement répartis longitudinalement le long de l'élément allongé de manière à ce qu'une fois l'enroulement réalisé, lorsque ces espaces se retrouvent partiellement jointifs dans les spires successives formant la couche considérée, des canaux permettant le drainage dans une direction F sensiblement longitudinale à l'intérieur de la couche soient formés. Ces canaux permettent au gaz de traverser transversalement les spires que forme l'élément allongé un fois enroulé. Ainsi, contrairement aux différentes solutions proposées dans l'art antérieur précédemment cité, le gaz n'est pas drainé le long de l'élément allongé 12 dans les jeux ou dans des gorges longitudinales positionnées le long dudit élément, mais est drainé dans une direction F sensiblement transversale à l'enroulement. Ainsi, grâce à l'invention, il devient possible d'effectuer un drainage efficace du gaz à l'intérieur de l'annulaire interne 30 dans une couche de la conduite dont l'élément est enroulé à pas court. On peut ainsi drainer à l'intérieur d'une couche fonctionnelle telle que la frette 13 par exemple, c'est-à-dire dans une couche qui apporte une contribution mécanique a la résistance de la structure de la conduite flexible aux contraintes de service ou d'installation qu'elle est destinée à supporter.

Selon l'invention la couche enroulée à pas court dont l'élément allongé présente les espaces de drainage transversaux pour permettre le drainage du gaz peut être constitué soit par l'armure de résistance à la pression 3, soit par la frette 13, voire éventuellement par une couche complémentaire distincte de la voûte de pression et située dans l'annulaire interne 30.

Selon le mode de réalisation illustré, la conduite comporte entre la gaine de pression 2 et la gaine intermédiaire 4, une première couche appelée armure de résistance à la pression 3 formée de l'enroulement à pas court d'un fil de forme agrafé destiné à résister aux contraintes radiales de la pression interne de la conduite. Ce fil de forme présente par exemple un profil en Z couramment appelé Zéta, mais d'autres profils peuvent également être utilisés, tel que des profils en T ou des profils de type fil-agrafe (T agrafé par un U,..). Elle comporte également une deuxième couche appelée frette 13 destinée à renforcer l'armure de résistance à la pression 3 et qui est formée de l'enroulement à pas court d'au moins un élément allongé (fil de forme ou feuillard métallique préformé par exemple). L'ensemble armure de résistance à la pression et frette forme ce qu'il est convenu d'appeler la voûte de pression de la conduite flexible. Dans le premier mode de réalisation illustré figure 2 et 3 de la conduite, la frette 13 est choisie pour présenter les espaces de drainage transversaux 15 jointifs entre ses spires.

Comme le montre la figure 3, la frette 13 est constituée de l'enroulement à pas court d'un profilé ou fil de forme 12 qui présente régulièrement réparti sur sa longueur plusieurs gorges ou évidements transversaux 15. Ces évidements sont avantageusement positionnés le long du profilé de manière à être aligné au moins partiellement avec un autre évidemment du profilé une fois l'enroulement effectué pour former des canaux transversaux. Afin de faciliter la formation des canaux transversaux de drainage à travers les spires successives, les évidements ou gorges 15 présentent une extrémité évasée. Selon ce mode de réalisation, la frette 13 présente les évidements sur sa face interne 13a de manière à ce que la face externe 13b en contact avec la gaine intermédiaire 4 présente une surface cylindrique sur laquelle la gaine peut être extrudée sans risque de colmatage des évidements transversaux. La frette 13 ainsi réalisée forme une couche de renfort pour l'armure de pression 3 qui permet de résister aux efforts radiaux de la pression interne mais elle permet également de transmettre les efforts de compression vers ladite armure de pression lors de l'installation de la conduite.

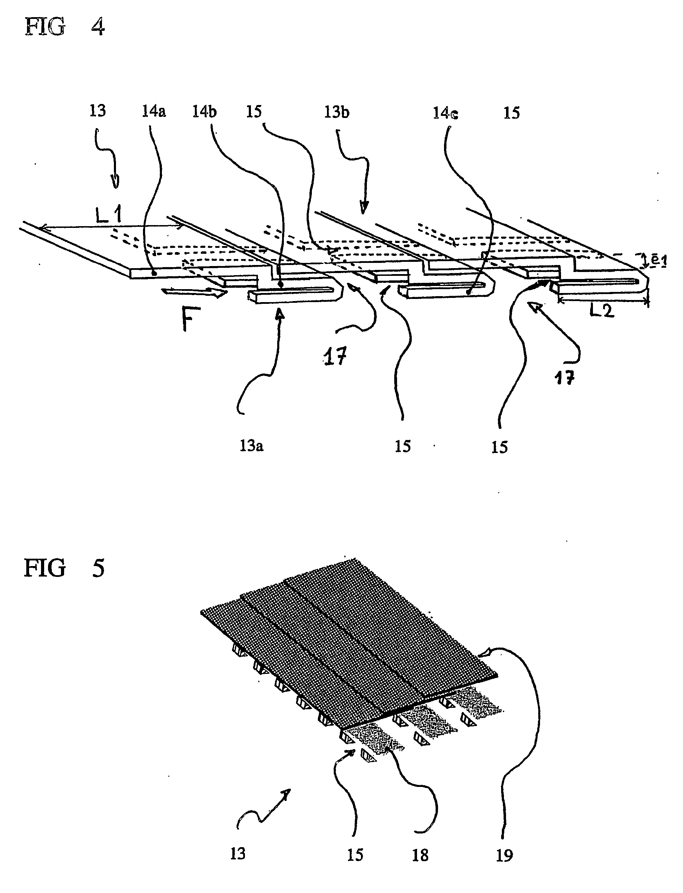

Dans un autre mode de réalisation illustré figure 4, la frette 13 est formée par l'enroulement d'un feuillard profilé 14. On peut noter que le feuillard 14 qui présente des évidements transversaux 15 peut être muni également d'un espace longitudinal 17 qui une fois l'enroulement réalisé permet de favoriser la circulation du gaz à l'intérieur d'une même spire. Ainsi, la figure 4 montre une frette 13 dont l'élément allongé est un feuillard métallique préformé 14 dont la section transversale est faite d'une partie supérieure en forme d'escalier comportant une partie gauche 14a d'une largueur L1 prolongée par une partie droite 14b de largeur L2, ladite partie droite étant prolongée par une partie inférieure 14c de largeur sensiblement égale à L2 repliée en dessous de ladite partie droite. La partie gauche 14a et la partie droite 14b sont avantageusement séparées d'une hauteur e1 correspondant sensiblement à l'épaisseur du feuillard utilisé pour réaliser le profil de manière à ce que la partie droite puisse être entièrement recouverte par la partie gauche de la spire suivante lors de l'enroulement à spire jointive. Les évidements transversaux 15 sont réalisés dans la partie recourbée inférieure 14c. En réalisant un profilé dont la largeur L1 est supérieure à la largeur L2, on ménage un espace longitudinal 17 dans le plan de chaque spire en dessous de la partie gauche du profil. De ce fait l'alignement des évidements transversaux entre deux spires consécutives n'est pas nécessaire pour assurer la continuité du drainage ou peut être réalisé moins rigoureusement.

Selon des modes de réalisation non représentés, la couche de drainage peut être positionnée en dessous de l'armure de pression 3 formée du fil de forme agrafé. Dans ce cas, les évidements de drainage seraient avantageusement positionnés sur la face externe de l'enroulement afin de présenter une surface interne cylindrique autour de la gaine de pression 2.

Selon une variante d'exécution illustrée figure 5, la couche de drainage spécifique est réalisée par l'enroulement à pas court de deux éléments allongés combinés, un fil cranté ou feuillard plié profilé 18 sur lequel est enroulé un feuillard plat 19.

La nature du matériau utilisé pour former l'élément allongé qui possède les évidements transversaux de drainage peut être de tous type. On peut notamment prévoir d'utiliser des profilés allongés métalliques tels que des fils de forme ou des feuillards profilés. On peut également envisager d'utiliser des matériaux polymère ou des structures mixtes polymère-métal en vue d'alléger la structure.

Selon les modes de réalisation préférés illustrés de l'invention, la conduite flexible est de type «Smooth Bore» et comporte une gaine d'étanchéité comme élément le plus interne. Toutefois, l'invention peut également trouver son application dans une conduite de type «Rough Bore» où l'élément le plus interne est une carcasse. Dans ce cas, la couche de drainage spécifique permet de drainer le gaz qui diffuse au travers de la gaine de pression à l'intérieur d'un annulaire dit interne où se trouve la voûte de pression, tandis que la gaine intermédiaire permet de définir un annulaire « externe » où sont disposées les nappes d'armures de traction et dans lequel aucun gaz provenant du fluide transporté ne diffuse. Cette disposition particulière permet avantageusement de réaliser une conduite de type «Rough Bore» dont les armures de traction peuvent être réalisées dans un matériau sans tenir compte des critères NACE de résistance dudit matériau à la corrosion en milieu H2S.

## Revendications

1. Conduite tubulaire flexible (1) pour le transport de fluide dans le domaine de l'exploitation pétrolière offshore du type comportant au moins de l'intérieur vers l'extérieur une gaine de pression (2) une voûte de pression comprenant au moins une armure de résistance à la pression (3), une gaine intermédiaire et au moins une nappe d'armures de traction (5, 6), **caractérisée en ce qu'**elle comporte dans l'espace annulaire interne (30) formé entre la gaine de pression (2) et la gaine intermédiaire (4), une couche (13) permettant le drainage des gaz présents dans cet espace annulaire (30) et **en ce que** ladite couche permettant le drainage est formée par l'enroulement à pas court d'au moins un élément allongé (12, 14, 18, 19) comportant des espaces ou évidement de drainage transversaux (15) qui permettent le drainage des gaz entre les spires successives de l'enroulement dans une direction sensiblement transversale aux dites spires.

2. Conduite tubulaire flexible (1) selon la revendication 1 **caractérisée en ce que** l'élément allongé est un fil de forme (12).

3. Conduite tubulaire flexible (1) selon la revendication 1 **caractérisée en ce que** l'élément allongé formant la couche permettant le drainage est réalisé en feuillard métallique préformé.

4. Conduite tubulaire flexible (1) selon l'une quelconque des revendications précédentes **caractérisée en ce que** la couche permettant le drainage (13) est formée par une frette entourant l'armure de résistance à la pression (3).

5. Conduite tubulaire flexible (1) selon l'une quelconque des revendications précédentes **caractérisée en ce que** l'angle d'armage de l'élément allongé de la couche permettant le drainage est supérieure à 70°.

6. Conduite tubulaire flexible (1) selon l'une quelconque des revendications précédentes **caractérisée en ce que** l'élément allongé (12) formant la couche permettant le drainage (13) comporte des évidements transversaux (15) répartis longitudinalement de manière à être alignés au moins partiellement avec un autre évidemment de l'élément une fois l'enroulement effectué pour former des canaux de drainage transversaux.

7. Conduite tubulaire flexible (1) selon l'une quelconque des revendications précédentes **caractérisée en ce que** l'élément allongé présente dans son profil un espace longitudinal destiné à permettre la circulation du gaz à l'intérieur d' une même spire.

8. Conduite tubulaire flexible (1) selon l'une quelconque des revendications précédentes **caractérisée en ce que** l'élément allongé formant la couche permettant le drainage 13 est réalisé intégralement ou partiellement en matériau polymère.

9. Conduite tubulaire flexible (1) selon la revendication 1 **caractérisée en ce que** la couche permettant le drainage est formée par l'enroulement de deux éléments allongés 18,19 différents.

## Claims

1. A flexible tubular pipe (1) for transporting fluid in the field of offshore oil exploitation, of the type comprising at least, from the inside towards the outside, one pressure casing (2), one pressure arch including at least one pressure-resistance sheathing (3), an intermediate casing and at least one traction sheathing sheet (5, 6), **characterised in that** it comprises, in the inner annular space (30) formed between the pressure casing (2) and the intermediate casing (4), a layer (13) enabling the draining of the gases present in this annular space (30) and **in that** said layer enabling draining is formed by the winding on, with a short pitch, of at least one elongate element (12, 14, 18, 19) comprising transverse draining spaces or recesses (15) which enable the draining of the gases between the successive spires of the winding in a direction which is substantially transverse to said spires.

2. The flexible tubular pipe (1) according to Claim 1 **characterised in that** the elongate element is a shaped wire (12).

3. The flexible tubular pipe (1) according to Claim 1 **characterised in that** the elongate element forming the layer enabling draining is made of a preformed metal strip.

4. The flexible tubular pipe (1) according to any one of the preceding claims **characterised in that** the layer enabling draining (13) is formed by a band surrounding the pressure-resistance sheathing (3).

5. The flexible tubular pipe (1) according to any one of the preceding claims **characterised in that** the sheathing angle of the elongate element of the layer enabling draining is greater than 70°.

6. The flexible tubular pipe (1) according to any one of the preceding claims **characterised in that** the elongate element (12) forming the layer enabling draining (13) comprises transverse recesses (15) which are distributed longitudinally so as to be aligned at least partially with another recess of the element once the winding on has been performed in order to form transverse draining channels.

7. The flexible tubular pipe (1) according to any one of the preceding claims **characterised in that** the elongate element has, in its profile, a longitudinal space for enabling the circulation of the gas inside a same spire.

8. The flexible tubular pipe (1) according to any one of the preceding claims **characterised in that** the elongate element forming the layer enabling draining 13 is made wholly or partly of polymer material.

9. The flexible tubular pipe (1) according to Claim 1 **characterised in that** the layer enabling draining is formed by the winding on of two different elongate elements 18, 19.

## Patentansprüche

1. Flexible Rohrleitung (1) zum Transport eines Fluids im Bereich der Offshore - Erdölausbeutung, die mindestens von innen nach aussen einen Druckmantel (2), eine Druckkuppel, die mindestens eine dem Druck widerstehende Bewehrung (3) umfasst, einen Zwischenmantel und mindestens eine dem Zug widerstehende Bewehrungsmatte (5, 6) umfasst, **dadurch gekennzeichnet, dass** sie in dem inneren, ringförmigen, zwischen dem Druckmantel (2) und dem Zwischenmantel (4) gebildeten Raum eine die Ableitung der in diesem ringförmigen Raum (30) anwesenden Gase erlaubende Schicht (13) umfasst, und dass die die Ableitung erlaubende Schicht durch eine kurzschrittige Wicklung mindestens eines länglichen Elements (12, 14, 18, 19) gebildet ist, das Transversalräume und -ausnehmungen (15) zur Gasableitung umfasst, die die Gasableitung zwischen den aufeinanderfolgenden Windungen der Wicklung in einer im wesentlichen transversalen Richtung in Bezug auf die Windungen erlauben.

2. Flexible Rohrleitung (1) zum Transport eines Fluids nach Patentanspruch 1, **dadurch gekennzeichnet, dass** das längliche Element ein Draht mit der Form (12) ist.

3. Flexible Rohrleitung (1) zum Transport eines Fluids nach Patentanspruch 1, **dadurch gekennzeichnet, dass** das längliche Element, das die die Ableitung erlaubende Schicht bildet, als vorgeformtes Metallbandeisen ausgeführt ist.

4. Flexible Rohrleitung (1) zum Transport eines Fluids nach einem der vorangehenden Patentansprüche, **dadurch gekennzeichnet, dass** die die Ableitung (13) erlaubende Schicht durch einen Schrumpfring gebildet ist, der die dem Druck widerstehende Bewehrung (3) umgibt.

5. Flexible Rohrleitung (1) zum Transport eines Fluids nach einem der vorangehenden Patentansprüche, **dadurch gekennzeichnet, dass** der Bewehrungswinkel des länglichen Elements der die Ableitung erlaubenden Schicht grösser als 70° ist.

6. Flexible Rohrleitung (1) zum Transport eines Fluids nach einem der vorangehenden Patentansprüche, **dadurch gekennzeichnet, dass** das längliche Element (12), das die die Ableitung (13) erlaubende Schicht bildet, Transversalausnehmungen (15) umfasst, die in Längsrichtung verteilt sind, so dass sie mindestens teilweise mit einer anderen Ausnehmung des Elements ausgerichtet sind, sobald die Wicklung zur Bildung der transversalen Ableitungskanäle ausgeführt ist.

7. Flexible Rohrleitung (1) zum Transport eines Fluids nach einem der vorangehenden Patentansprüche, **dadurch gekennzeichnet, dass** das längliche Element in seinem Profil einen länglichen Raum aufweist, der dazu bestimmt ist, das Umlaufen des Gases im Innern der gleichen Windung zu erlauben.

8. Flexible Rohrleitung (1) zum Transport eines Fluids nach einem der vorangehenden Patentansprüche, **dadurch gekennzeichnet, dass** das längliche Element (12), das die die Ableitung (13) erlaubende Schicht bildet, vollständig oder teilweise aus Polymermaterial ausgeführt ist.

9. Flexible Rohrleitung (1) zum Transport eines Fluids nach Patentanspruch 1, **dadurch gekennzeichnet, dass** die die Ableitung erlaubende Schicht durch die Wicklung von zwei verschiedenen länglichen Elementen (18, 19) gebildet ist.
